# EUROPEAN PATENT APPLICATION

(11) **EP 1 962 241 A1**
(43) Date of publication of application: **27.08.2008**
(21) Application number: 06834029.8
(22) Date of filing: 05.12.2006
(51) Int. Cl.: G06Q 30/00

(54) **CONTENT SEARCH DEVICE, CONTENT SEARCH SYSTEM, SERVER DEVICE FOR CONTENT SEARCH SYSTEM, CONTENT SEARCHING METHOD, AND COMPUTER PROGRAM AND CONTENT OUTPUT APPARATUS WITH SEARCH FUNCTION**

(30) Priority: 05.12.2005 JP 2005351044
(71) Applicant: Pioneer Corporation, Tokyo 153-8654 (JP)
(72) Inventor: HORIUCHI, Naoaki, Tsurugashima-shi, Saitama 350-2288 (JP); KIKUCHI, Fumiko, Tokyo 153-8654 (JP); YOSHIDA, Masayoshi, Tokorozawa-shi, Saitama 359-8522 (JP); KATAOKA, Yoshinori, Tokorozawa-shi, Saitama 359-8522 (JP); SHIRAHAMA, Makoto, Tokorozawa-shi, Saitama 359-8522 (JP); OCHI, Junya, Kawagoe-shi, Saitama 350-8555 (JP); SHIODA, Takehiko, Tsurugashima-shi, Saitama 350-2288 (JP)
(74) Representative: Viering, Jentschura & Partner
(86) International application number: PCT/JP2006/324274
(87) International publication number: WO 2007/066663

(57) **Abstract**

In a car audio device (10), a CPU (111) executes a music piece searching process. In the music piece searching process, an icon is selected from the icon selection region (220) on the display screen (210), and when the icon is put in the icon setting region (230), the relevant icon is set as the icon representing a searching condition. In this case, the value of the icon attribute to be a searching condition changes according to an operation content in the icon setting region (230), such as a moving operation or enlarging and reducing operations. When a plurality of icons are put in the icon setting region (230), the priority of icons specifying searching conditions also changes according to the positional relationship between these icons or the relation of the display ratios.

## Description

### Technical Field

The present invention relates to a content search apparatus for searching for various contents such as music, a content search system, a server apparatus for the content search system, a content search method, a computer program, and a content output apparatus with such a search function for searching for and outputting the contents.

### Background Art

As this type of technical field, using icons has been suggested (e.g. refer to a patent document 1 or the like). According to an information search method disclosed in the patent document 1 (hereinafter referred to as a "conventional technology"), if a desired icon is selected from icons displayed on a screen on a user terminal side, a search server searches for a related content on the basis of information about the selected icon, and presents information about the searched content on an icon answer screen on the user terminal side, so that a user can set a search condition by instinct even if the user does not correctly understand a search target.

Moreover, there has been also suggested a technology of using a graph to specify a feel of music and set the level of each search condition (e.g. refer to a patent document 2).
Patent document 1: Japanese Patent Application Laid Open NO. 2003-271630
Patent document 2: Japanese Patent Application Laid Open NO. 2003-5756

### Disclosure of Invention

### Subject to be Solved by the Invention

If a large amount of contents is searched for the content that matches the user's feeling or emotion, there will be an enormous number of icons for specifying the search condition. It is complicate for the user to select the icon that matches own feeling or emotion as the search condition from the enormous number of icons, resulting in a difficulty in reducing a load required for the user to search for the content. On the other hand, if there are fewer icons that are set, it can be simpler to select the icon itself, however, too many contents are associated with one icon and the user has to search for the content that truly matches the own feeling or emotion from the search result, so it is extremely inefficient. That is, the conventional technology has such a technical problem that the user can hardly search for the content that matches the own feeling or emotion, efficiently and effectively.

It is therefore an object of the present invention to provide a content search apparatus, a content search system, a server apparatus for the content search system, a content search method, a computer program, and a contents output apparatus with a search function, which can search for the content that matches the user's feeling or emotion, efficiently and effectively.

### Means for Solving the Subject

<Content search Apparatus>

The above object of the present invention can be achieved by a content search apparatus for searching for predetermined types of contents on a display screen provided for a displaying device, the content search apparatus provided with: a display controlling device for controlling the displaying device to display an icon in which change characteristics according to predetermined types of operations on the display screen are set in advance in an attribute value, which is defined to represent an attribute of the content and to represent a status of the attribute; an attribute value specifying device for specifying the attribute value corresponding to performed operations in accordance with the change characteristics if the predetermined types of operations are performed on the displayed icon; and a searching device for searching for the content corresponding to the specified attribute value from the plurality of contents, each of which has a value corresponding to the attribute value given in advance, with regard to at least one type of the attribute.

The "predetermined types of contents" in the present invention conceptually include software of a type that affects a user's audio-visual sense, feeling, and emotion, and they indicate various music songs which belong to various music genres, such as Rock, Pops, Enka or Japanese ballad, Jazz, or Classical music, and various video images which belong to various genres, such as a drama, movie, animation, documentary, or variety, or the like. Incidentally, those are merely an example, and what can be searched for by the content search apparatus of the present invention is in the scope of the contents of the present invention.

The "displaying device" of the present invention indicates various display apparatuses or the like, such as a plasma display apparatus, a liquid crystal apparatus, a liquid crystal projector apparatus, and a CRT (Cathode Ray Tube) display apparatus. There is no limitation in the size, shape, and setting aspect of the displaying device, and they may be substantially fixed at home, a company, a hospital, or various facilities or the like. Alternatively, it may have portability by installing it on a watch, a mobile phone, a PDA (Personal Digital Assistance) or the like. Alternatively, it may be installed as one portion of on-vehicle audio equipment, on-vehicle video equipment, a car navigation system, or the like.

According to the content search apparatus of the present invention, upon the operation thereof, the displaying device is controlled by the display controlling device to display the icon on the display screen as the operation target icons.

The "icon" of the present invention conceptually includes visual information in which various operations, such as selection, displacement, enlargement, and contraction, can be performed on the display screen provided for the displaying device. In particular, on the content search apparatus of the present invention, the icon is set to represent the attribute of the content.

Here, the "attribute of the content" indicates the feature of the content, qualitatively or specifically. For example, it may be a qualitative feature, such as "happy", "sad", "cheerful", "calm", "with a tempo", or "slow", or a specific feature that matches the content, such as "male", "female", "season", "wedding ceremony", "time", "alcohol", "drive", "beach", or "party".

The individual icon has the attribute value set, which is for defying the status of the attribute. The "status of the attribute" herein indicates the degree of the feature represented by the individual attribute or the element of the individual attribute, or the like. Therefore, the status of the attribute may vary in the content, as occasion demands, depending on the type of the attribute, or the like. For example, for the attribute that represents the qualitative feature, such as "happy" or "bright", it may be the degree of happiness or brightness, such as "supremely happy", "very happy", and "relatively happy", or "supremely bright", "very bright", and "relatively bright". On the other hand, for example, for the attribute that represents the specific feature, such as "season" or "time", it may be the individual element in the season or time, such as "spring", "summer", "autumn", and "winter", or "early morning", "all morning", "afternoon", "night", and "midnight".

The attribute value representing the status of the attribute may adopt various forms in accordance with the status of the attribute. For example, with regard to the attribute of "happy" described above, it may be an index value quantified to define "happiness". In this case, an upper limit value and a lower limit value of the index value, or a range of the index value may be determined in each attribute, as occasion demands, or may be common in each attribute. In this case, the index value of "happiness" may be set in a range of "0" to "100", wherein "100" represents the happiest and "0" represents the least happy. Moreover, the case that the "happiness" is "0" may be treated as equivalent with the case that the index value of "sadness" is "100", wherein the sadness is an opposite concept of the happiness.

On the other hand, with regard to the specific attribute, such as "season" or "time", the attribute value indicates, for example, the individual element itself described above. Specifically, for example, the attribute value of the icon which represents the attribute of "season" adopts a value representing "spring", "summer", "autumn", "winter", "rainy season", "Bon or Buddhist festival", "sunset", or "New year". Incidentally, in this case, a particular season such as "summer" can be represented as one portion of the attribute value of the icon representing the attribute of "season"; however, of course, independently thereof, the icon representing the attribute of "summer" may be prepared in advance. That is, in the content search apparatus of the present invention, at least one portion of the attributes that can be represented by the individual icons may overlap with each other. Moreover, there is no limitation in the number of icons prepared in advance and the number of icons displayed on the display screen, which are the user's choices.

On the other hand, in the content search apparatus of the present invention, the change characteristics according to the predetermined types of operations on the display screen are further set for the attribute value.

The predetermined types of operations conceptually include operations performed on the icon on the display screen in order that the user reflects the own feeling or emotion in a content search condition. For example, the predetermined types of operations indicate an operation of selecting the displayed icon, an operation of displacing the selected icon vertically, horizontally, or obliquely, in a predetermined area on the display screen, an operation of enlarging or contracting the selected icon on the display screen, and the like. Incidentally, of course, these are one example, and all the operations that can be performed on the display screen can be the predetermined operations in the present invention.

The change characteristics of the attribute value according to the operations may be arbitrarily set in accordance with the type of the attribute, of course. For example, as described above, if the attribute value regarding the attribute which represents the qualitative feature adopts some form of the index value, the change characteristics may be a continuous or step-by-step change in the index value in a preset range. Moreover, in case of the attribute value regarding the attribute which represents the specific feature, the change characteristics may be a change aspect in which any of the values that represent the individual elements as so-called options (e.g. the attribute values of "spring", "summer", and the like in the aforementioned example) is selected at each time.

Moreover, in accordance with which operation the attribute value changes is not limited at all, and it may be determined individually and specifically in each attribute in advance. Alternatively, the user may be able to set it as occasion demands. For example, with regard to the icon representing the attribute of "happy", it may be set such that the index value of "happiness" increases as the icon becomes larger, Alternatively, if the icon of "season" is displaced from one edge to the other edge on the display screen, the attribute value may be set to be changed like "spring"→"summer" →"autumn" →"winter". Incidentally, there may be a plurality of types of operations that are set for one icon. Moreover, the change characteristics of the attribute value of the icon and the content of the operations performed by the user may be set to match the individual user's feeling or emotion or to match the average user's feeling or emotion, on an experimental, experiential, or simulation basis in advance.

Incidentally, the attribute that can be represented as the icon includes an attribute in which the change in the attribute value hardly occurs or in which no change is considered natural. For example, of the attribute that represents the specific feature, a clear and specific concept itself such as "beach" and "drive" is the attribute value. For example, a change from "beach" to "mountain" or "river" easily tends to be out of the user's feeling. The change characteristics in the above case can be considered as those set not to be changed for any operation. That is, this type of icon may be treated to represent one attribute value, regardless of how to be operated and where to be disposed on the display screen,

If the aforementioned various operations are performed on the displayed icon, the attribute value specifying device specifies the attribute value corresponding to the operations performed in accordance with the change characteristics described above. Then, the searching device searches for the content corresponding to the specified attribute value from the plurality of contents, to each of which the value corresponding to the attribute is given in advance, with regard to at least one type of attribute.

To each of the plurality of contents, the value corresponding to the attribute is given in advance, with regard to at least one type of attribute. Here, the value corresponding to the attribute may be the attribute value itself, or may be some value which has a one-to-one, many-to-one, one-to-many, or many-to-many relationship with the attribute value. For example, as the value corresponding to the attribute value regarding the specific attribute described above, the content may be a flag which represents whether or not to correspond to the relevant attribute value (e.g. the value which represents "summer" or the like).

The "content corresponding to the specified attribute value", searched for by the searching device, ideally indicates the content in which the specified attribute value matches the given value; however, in addition to such a content, it broadly includes, in effect, the content to which a value close to the specified value is given, wherein the value is close enough to be regarded as matching the user's feeling or emotion reflected as the specified attribute value. A criterion for whether or not to be the content corresponding to the specified attribute value may be determined at least not to depart from the user's feeling or emotion on an experimental, experiential, or simulation basis in advance, or it may be determined, individually and specifically, in accordance with the type of the attribute, or the like. On the other hand, considering that the number of contents is finite, the content that matches or has a relatively close value to the specific attribute value does not always exist. Thus, as a method different from the aforementioned approach, the contents of the quantity that is set in advance in closer order to the specified attribute value may be searched for. In this case, despite the degree of conformance to the user's feeling or emotion, some search result can be obtained, so that it is useful in practice.

As described above, according to the content search apparatus of the present invention, it is possible to change the content search condition variously, by performing visual and sensuous operations on the icon displayed on the display screen. For example, even simply when the icon representing "season" is displayed, the detailed and various search conditions, such as "spring", "summer", "autumn", "winter", "New year", "Bon or Buddhist festival", or "rainy season", can be specified by the operations on the display screen. Therefore, it is not necessary to display all the prepared icons on the display screen in advance, and not displaying all the prepared icons does not make the search condition cursory. Moreover, because of the visual and sensual operations with the display screen visually recognized, it is easy to reflect the user's feeling or emotion, so that it is possible to search for the content that matches the user's feeling or emotion. That is, it is possible to realize the search for the content that matches the user's feeling or emotion, efficiently and effectively.

In one aspect of the content search apparatus of the present invention, the predetermined types of operations include at least one of (i) an operation of changing a size of the icon and (ii) an operation of changing a position of the icon.

According to this aspect, it is efficient and effective because it is possible to change the attribute value, as being the search condition, by relatively easy operations, such as changing the size or position of the icon on the display screen.

In another aspect of the content search apparatus of the present invention, the searching device searches for the content corresponding to the specified attribute value on the basis of at least one of (i) a positional relationship and (ii) a ratio of size among a plurality of icons if the predetermined types of operations are performed on the plurality of icons on the display screen.

Of course, the plurality of icons can be displayed on the display screen; however, the predetermined types of operations are performed on a plurality of icons of the displayed icons in some cases. In those cases, in addition to the change characteristics of the attribute value described above regarding the individual icons, the relationship among the icons can be also used as the search condition.

According to this aspect, the searching device searches for the content corresponding to the specified attribute value, on the basis of the positional relationship or the ratio of size among the plurality of icons on which the predetermined types of operations are performed. Thus, it is possible to search for the content that is more complicated, in other words, that matches more the user's feeling or emotion.

In the case that the positional relationship among the plurality of icons is rejected in the content search, if for example the plurality of icons are arranged with them mutually overlapping, an AND search of the specified attribute value may be performed on the individual icons. For example, if both icons of "happy" and "bright" are arranged with them overlapping, the content that is happy and bright may be searched for. Incidentally, in view of the aforementioned change characteristics, the overlap arrangement can be difficult if the degrees or the like of the attribute values of the icons are different from each other. On the other hand, even if the overlap arrangement is not desired, as a result of performing the operations to set the attribute values of the individual icons to desired values, the display positions of the icons overlap in some cases. In case for that, the content search apparatus may be adapted to perform a process of avoiding such an unwilling overlap arrangement, or a process regarded as overlapping the icons that are disposed away from each other, or the like, through the predetermined operations.

On the other hand, if the ratio of the size among the icons is reflected in the content search, for example, the attribute value regarding the icon that is displayed larger may be prioritized for the content search. For example, if the icons of "happy" and "bright" are both displayed and if the icon of "happy" is larger, it is possible to search for the content that is relatively bright from the happy content. Incidentally, the aspect in which the positional relationship and the ratio of size are reflected in the search condition may be determined not to interfere with the user's feeling or emotion, on an experimental, experiential, or simulation basis in advance. Incidentally, if the attribute value of the icon is changed by the size of the icon, the ratio of size among the icons does not necessarily indicate the priority of the search condition. In case for that, the content search apparatus may be adapted to select whether or not to reflect the ratio of size among the icons in the search condition, as occasion demands.

In another aspect of the content search apparatus of the present invention, it is further comprising a display aspect determining device for determining an aspect of displaying the icon on which the predetermined types of operations are performed, in accordance with the specified attribute value, the display controlling device controlling the displaying device to display the icon on which the predetermined types of operations are performed, in the determined display aspect, on the display screen.

According to this aspect, since the display aspect of the icon can be changed in accordance with the specified attribute value, the user can recognize the content search condition at the current time, visually and sensually, so that it is effective.

The display aspect determined by the display aspect determining device may be arbitrary as long as it can be associated with the specified attribute value. For example, it may be an aspect of displaying information corresponding to the attribute value as text information, e.g. text information of "supremely happy" or "summer" or the like, around the icon, or the icon itself may be changed to the icon corresponding to the specified attribute value. In this case, if there is another icon corresponding to the specified attribute value, the relevant icon may be displayed. For example, in the case that the attribute value is a value representing "summer" as a result of operating the icon of "season" on the display screen, the icon representing "summer" may be displayed if the icon representing "summer" is prepared in advance.

In another aspect of the content search apparatus of the present invention, it is further provided with a content information generating device for generating content information corresponding to the searched content, the display controlling device further controlling the displaying device to display the content information on the display screen.

According to this aspect, the content information corresponding to the searched content is displayed on the display screen, which allows the user to visually recognize the searched content, so that it is preferable.

Incidentally, the content information conceptually includes information having at least some relationship with the searched content. Preferably, it indicates information including the content that the user desires as a search result. For example, it indicates the title of the content (a song title, movie title, or the like), artist name, director name, performer name, various supplementary information about the content, and the like. The content information may be a list of contents, for example.

In another aspect of the content search apparatus of the present invention, it is further provided with an inputting device for performing the predetermined types of operations.

According to this aspect, it is provided with the inputting device which can adopt the various forms of input equipment, such as a touch panel apparatus, an operation dial, an operation lever, a scroll button, or various pointing device, such as a keyboard and a mouse. Thus, it is possible to preferably perform the predetermined types of operations, such as operations of selection, displacement, or enlargement / contraction.

In another aspect of the content search apparatus of the present invention, it is further provided with a first memory device for storing a plurality of icons.

According to this aspect, it is possible to search for the content, efficiently and effectively, by storing the icons in the memory device having various recording media, such as a hard disk, a DVD, a CD, or a BD. Incidentally, the user or icon provider or the like can easily add the icon, as occasion demands, if the first memory device includes a rewritable recording medium, so that it is preferable.

In another aspect of the content search apparatus of the present invention, it is further provided with a second memory device for storing the plurality of contents.

According to this aspect, it is possible to search for the content, efficiently and effectively, by storing the icons in the memory device having various recording media, such as a hard disk, a DVD, a CD, or a BD. In this case, moreover, the user can easily add the content, as occasion demands, and in particular, the user's shooting video or recorded audio or the like can be also stored as one portion of the contents, so that it is preferable. Incidentally, the first memory device and the second memory device described above may have hardware structures that are at least partially common or that are completely independent of each other.

### <Content Output Apparatus with Search Function>

The above object of the present invention can be also achieved by a content output apparatus with a search function, provided with: the content search apparatus described above (including its various aspects); and an outputting device for outputting the searched content.

According to the content output apparatus with the search function of the present invention, the content that is searched for to match the user's feeling or emotion is further outputted to the user, so that it is possible to provide a high degree of satisfaction for the user.

Incidentally, the form of the outputting device varies depending on the types and content of the contents or the like, and it may be changed depending thereon as occasion demands. For example, the outputting device may be a reproducing apparatus for a hard disk and a DVD or the like, or may have various types of audio system forms or the like.

### <First Content Search System>

The above object of the present invention can be also achieved by a first content search system provided with: the content search apparatus described above (including its various aspects); and the displaying device.

According to the first content search system of the present invention, it is provided with the aforementioned content search apparatus and the displaying device, so that the effect related to the content search apparatus described above is provided efficiently

### <Second Content Search System>

The above object of the present invention can be also achieved by a second content search system, included in a network and including: a server apparatus; and at least one terminal apparatus, the terminal apparatus provided with: a display controlling device for controlling the displaying device to display an icon in which change characteristics according to predetermined types of operations on the display screen are set in advance in an attribute value, which is defined to represent an attribute of the content and to represent a status of the attribute; an operation information generating device for generating predetermined operation information if the predetermined types of operations are performed on the displayed icon, the operation information indicating that the predetermined types of operations are performed on the displayed icon; and a first communicating device for transmitting the operation information to the server apparatus through the network, the server apparatus provided with: an attribute value specifying device for specifying the attribute value corresponding to the performed operations if the transmitted operation information is obtained; a searching device for searching for the content corresponding to the specified attribute value from the plurality of contents, each of which has a value corresponding to the attribute value given in advance, with regard to at least one type of the attribute; a content information generating device for generating content information corresponding to the searched content; and a second communicating device for transmitting the content information to the terminal apparatus to the network, the display controlling device controlling the displaying device to display the content information on the display screen if the transmitted content information is obtained.

The second content search system of the present invention is included in the network and includes the server apparatus and the terminal apparatus.

Here, the "network" indicates a WAN (Wide Area Network), LAN (Local Area Network), or an Internet environment connected through the communication networks, or the like. The network conceptually includes the communication network that can be used by a special majority or an unspecified majority of users.

Here, the "server apparatus" conceptually includes various computer systems, such as a work station or a personal computer. Moreover, the "terminal apparatus" may vary for each user who uses the embodiment of the second content search system of the present invention. For example, the terminal apparatus can adopt various forms, such as various recording / reproducing apparatus for customer use (e.g. a hard disk recording apparatus, a DVD recording / reproducing apparatus, or the like), a personal computer, a mobile phone, a PDA, game equipment with a network function, a car audio system, and a car navigation system.

According to the second content search system of the present invention, the server apparatus is provided with the attribute value specifying device, the searching device, the content information generating device, and the second communicating device. That is, a process which belongs to a relatively heavy load category, such as the specification of the attribute value and the search for the contents, is performed on the server apparatus side. On the terminal apparatus on the user's side, the content information transmitted through the network may be displayed on the display screen through the control of the display controlling device, so that it is possible to receive the effect of the present invention, efficiently, and it is preferable.

Incidentally, in the second content search system of the present invention, the owner side of the server apparatus may provide a content search service through the server apparatus, for the user who has paid to register, for example.

### <Server Apparatus for Content Search System>

The above object of the present invention can be also achieved by a server apparatus for a content search system, included in a network with at least one terminal apparatus and used in a content search system in which the terminal apparatus comprises: a display controlling device for controlling the displaying device to display an icon in which change characteristics according to predetermined types of operations on the display screen are set in advance in an attribute value, which is defined to represent an attribute of the content and to represent a status of the attribute; an operation information generating device for generating predetermined operation information if the predetermined types of operations are performed on the displayed icon, the operation information indicating that the predetermined types of operations are performed on the displayed icon; and a first communicating device for transmitting the operation information to the server apparatus through the network, the server apparatus provided with: an attribute value specifying device for specifying the attribute value corresponding to the performed operations in accordance with the change characteristics set in advance if the transmitted operation information is obtained; a searching device for searching for the content corresponding to the specified attribute value from the plurality of contents, each of which has a value corresponding to the attribute value given in advance, with regard to at least one type of the attribute; a content information generating device for generating content information corresponding to the searched content; and a second communicating device for transmitting the content information to the terminal apparatus to the network, the display controlling device controlling the displaying device to display the content information on the display screen if the transmitted content information is obtained.

According to the server apparatus for the content search system of the present invention, it is possible to search for the content that matches the user's feeling or emotion, efficiently and effectively, and to provide it as the search result for the terminal apparatus included in the network, by providing the same structure as that of the server apparatus in the second content search system of the present invention described above.

### <Content Search Method>

The above object of the present invention can be also achieved by a content search method for searching for predetermined types of contents on a display screen provided for a displaying device, the content search method provided with: a display controlling process of controlling the displaying device to display an icon in which change characteristics according to predetermined types of operations on the display screen are set in advance in an attribute value, which is defined to represent an attribute of the content and to represent a status of the attribute; an attribute value specifying process of specifying the attribute value corresponding to performed operations in accordance with the change characteristics if the predetermined types of operations are performed on the displayed icon; and a searching process of searching for the content corresponding to the specified attribute value from the plurality of contents, each of which has a value corresponding to the attribute value given in advance, with regard to at least one type of the attribute.

According to the content search method of the present invention, it is possible to obtain the same effect as that of the content search apparatus of the present invention, by the operation in each process, which is the same as that of the content search apparatus of the present invention.

<First Computer Program>

The above object of the present invention can be also achieved by a first computer program making a computer system function as the content search apparatus described above (including its various aspects)

According to the computer program of the present invention, the aforementioned content search apparatus of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects of the aforementioned content search apparatus of the present invention, the computer program of the present invention can also employ various aspects,

### <Second Computer Program>

The above object of the present invention can be also achieved by a second computer program making a computer system function as the terminal apparatus described above.

According to the computer program of the present invention, the aforementioned terminal apparatus in the second content search system of the present invention can be relatively easily realized as a computer reads and executes the computer program from a program storage device, such as a ROM, a CD-ROM, a DVD-ROM, and a hard disk, or as it executes the computer program after downloading the program through a communication device.

<Third Computer Program>

The above object of the present invention can be also achieved by a third computer program making a computer system function as the server apparatus described above.

According to the computer program of the present invention, the aforementioned server apparatus in the second content search system of the present invention can be relatively easily realized as a computer reads and executes the computer program from a program storage device, such as a ROM, a CD-ROM, a DVD-ROM, and a hard disk, or as it executes the computer program after downloading the program through a communication device.

The above object of the present invention can be also achieved by a first computer program product in a computer-readable medium for tangibly embodying a program of instructions executable by a computer, the computer program product making the computer function as the aforementioned content search apparatus (including its various aspects).

The above object of the present invention can be also achieved by a second computer program product in a computer-readable medium for tangibly embodying a program of instructions executable by a computer, the computer program product making the computer function as the aforementioned terminal apparatus.

The above object of the present invention can be also achieved by a third computer program product in a computer-readable medium for tangibly embodying a program of instructions executable by a computer, the computer program product making the computer function as the aforementioned server apparatus.

According to each of the computer program products of the present invention, the aforementioned content search apparatus, terminal apparatus, or server apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned content search apparatus, terminal apparatus, or server apparatus of the present invention.

As explained above, the content search apparatus of the present invention is provided with the display controlling device, the attribute value specifying device, and the searching device. Thus, it is possible to realize the search for the content that matches the user's feeling or emotion, efficiently and effectively.

As explained above, the content output apparatus with the search function of the present invention is provided with the outputting device in addition to the content search apparatus of the present invention. Thus, it is possible to realize the search for the content that matches the user's feeling or emotion, efficiently and effectively.

As explained above, the first content search system of the present invention is provided with the displaying device in addition to the content search apparatus of the present invention. Thus, it is possible to realize the search for the content that matches the user's feeling or emotion, efficiently and effectively.

As explained above, the second content search system of the present invention is provided with the server apparatus and the terminal apparatus. Thus, it is possible to realize the search for the content that matches the user's feeling or emotion, efficiently and effectively.

As explained above, the server apparatus for the content search system of the present invention is provided with the attribute value specifying device, the searching device, the content information generating device, and the second communicating device. Thus, it is possible to realize the search for the content that matches the user's feeling or emotion, efficiently and effectively.

As explained above, the content search method of the present invention is provided with the display controlling process, the attribute value specifying process, and the searching process. Thus, it is possible to realize the search for the content that matches the user's feeling or emotion, efficiently and effectively.

As explained above, the first computer program of the present invention makes the computer system function as the content search apparatus of the present invention. Thus, it is possible to realize the search for the content that matches the user's feeling or emotion, efficiently and effectively.

As explained above, the second computer program of the present invention makes the computer system function as the terminal apparatus of the present invention. Thus, it is possible to realize the search for the content that matches the user's feeling or emotion, efficiently and effectively.

As explained above, the first computer program of the present invention makes the computer system function as the server apparatus of the present invention. Thus, it is possible to realize the search for the content that matches the user's feeling or emotion, efficiently and effectively.

These effects and other advantages of the present invention will become more apparent from the examples explained below.

### Brief Description of Drawings

[FIG. 1] FIG. 1 is a block diagram showing an on-vehicle audio apparatus in a first embodiment of the present invention.
[FIG. 2] FIG. 2 is a schematic diagram showing an icon database provided for a music search apparatus which constitutes the on-vehicle audio apparatus in FIG. 1.
[FIG. 3] FIG. 3 is a schematic diagram showing a music database provided for a music search apparatus which constitutes the on-vehicle audio apparatus in FIG. 1.
[FIG. 4] FIG. 4 is a schematic diagram showing music data in the music database in FIG. 3.
[FIG. 5] FIG. 5 is a schematic diagram showing music attribute value data which constitutes the music data in FIG. 4.
[FIG. 6] FIG. 6 is a flowchart showing a music search process.
[FIG. 7] FIG. 7 is a schematic diagram showing an initial setting screen.
[FIG. 8] FIG. 8 is a schematic diagram showing a display screen of a display apparatus.
[FIG. 9] FIG. 9 is another schematic diagram showing the display screen of the display apparatus.
[FIG. 10] FIG. 10 is another schematic diagram showing the display screen of the display apparatus.
[FIG. 11] FIG. 11 is another schematic diagram showing the display screen of the display apparatus.
[FIG. 12] FIG. 12 is another schematic diagram showing the display screen of the display apparatus.
[FIG. 13] FIG. 13 is a conceptual view showing a music search system in a second embodiment of the present invention.
[FIG. 14] FIG. 14 is a block diagram showing a server apparatus in the music search system in FIG. 13.
[FIG. 15] FIG. 15 is a block diagram showing a terminal apparatus in the music search system in FIG. 13.

### Description of Reference Codes

10···on-vehicle audio apparatus, 20···music search system, 21···network, 100 ···music search apparatus, 110···control device, 111···CPU, 120···music list generation device, 130···display control device, 140···operation device, 150··· memory device, 151···icon DB, 152···music DB, 200···display apparatus, 210 ···display screen, 220···icon selection area, 221, 222, 223, 224, 225, 226, 227, 228···icon, 230···icon setting area, 240···search result display area, 300··· music output device, 500a···terminal apparatus, 600···server apparatus

### Best Mode for Carrying Out the Invention

FIoreinafter, the best mode for carrying out the present invention will be explained in each embodiment in order with reference to the drawings.

### <First Embodiment>

### <Structure of Embodiment>

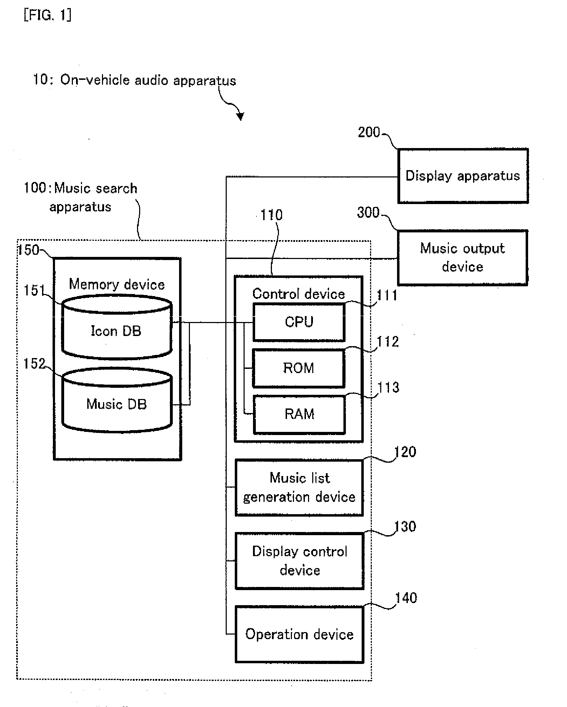

Firstly, with reference to FIG. 1, the structure of an on-vehicle audio apparatus in a first embodiment of the present invention will be explained. FIG. 1 is a block diagram showing an on-vehacle audio apparatus 10.

In FIG. 1, the on-vehicle audio apparatus 10 is provided with: a music search apparatus 100; a display apparatus 200; and a music output apparatus 300, and it is mounted on a not-illustrated vehicle. The on-vehicle audio apparatus 10 is also adapted to provide the music (i.e. one example of the "content" of the present invention) desired by an occupant who is a user in the vehicle. The on-vehicle audio apparatus 10 is one example of the "content output apparatus with the search function" and the "content search system" of the present invention.

The music search apparatus 100 is provided with: a control device 110; a music list generation device 120; a display control device 130; an operation device 140; and a memory device 150. The music search apparatus 100 is one example of the "content search apparatus" of the present invention.

The control device 110 is provided with: a CPU (Central Processing Unit) 111; a ROM (Read Only Memory) 112; and a RAM (Random Access Memory) 113.

The CPU 111 is an electronic control unit which is adapted to control all the operations of the on-vehicle audio apparatus 10. The CPU 111 is constructed to function as one example of each of the "attribute value specifying device" and the "searching device" of the present invention.

The ROM 112 is a non-volatile memory apparatus for storing therein various control programs which can be executed by the CPU 111. The ROM 112, in particular, stores therein a control program for performing a music search process described later, and the CPU 111 is adapted to perform the music search process in accordance with the control program.

The RAM 113 is a buffer memory which is adapted to temporarily store therein various data which is generated in the course of the CPU 111's performing the music search process.

The music list generation device 120 is adapted to generate a list of searched music, which is one example of the "content information" of the present invention. The music list generation device 120 is one example of the "content information generating device" of the present invention.

The display control device 130 is an image control unit which is adapted to control the display apparatus 200 to display various information including information about the music search process, on a display screen 210 (not illustrated in FIG. 1) provided for the display apparatus 200. The display control device 130 is one example of the "display controlling device" of the present invention.

The operation device 140 is an input device which is operated by the user of the on-vehicle audio apparatus 10, and the operation device 140 is one example of the "inputting device" of the present invention. In this embodiment, the operation device 140 is constructed as a touch panel input apparatus including a touch panel apparatus and a pen input device. In particular, the touch panel apparatus is unified with the display screen 210 of the display apparatus 200. When the user performs various operations on the display screen 210 with the pen input device, output signals corresponding to the various operations are outputted from the touch panel apparatus. The control device 110 is constructed to perform a process corresponding to the user's operation on the basis of the output signal which is outputted as occasion demands.

The memory device 150 is provided with: an icon database (hereinafter referred to as an "icon DB" as occasion demands) 151; and a music database (hereinafter referred to as a "music DB" as occasion demands) 152. The memory device 150 is a high-capacity memory apparatus, which is one example of the "memory device" of the present invention.

The icon DB 151 is a database which stores therein data about various icons for specifying a search condition in the music search process. Incidentally, the details of the icon DB 151 will be descried later.

The music DB 152 is a database which stores therein various data about a large amount of music, which become a search target in the music search process. Incidentally, the details of the music DB 152 will be described later.

The display apparatus 200 is provided with the display screen 210 (not illustrated), which is a liquid crystal display, and it is adapted to display the various information and various information screens related to the music search process. The display apparatus 200 is one example of the "displaying device" of the present invention.

The music output device 300 includes various processing units (e.g. an amplifier, a speaker, and the like) for sounding the various music searched for by the music search process, in the vehicle. The music output device 300 is one example of the "outputting device" of the present invention.

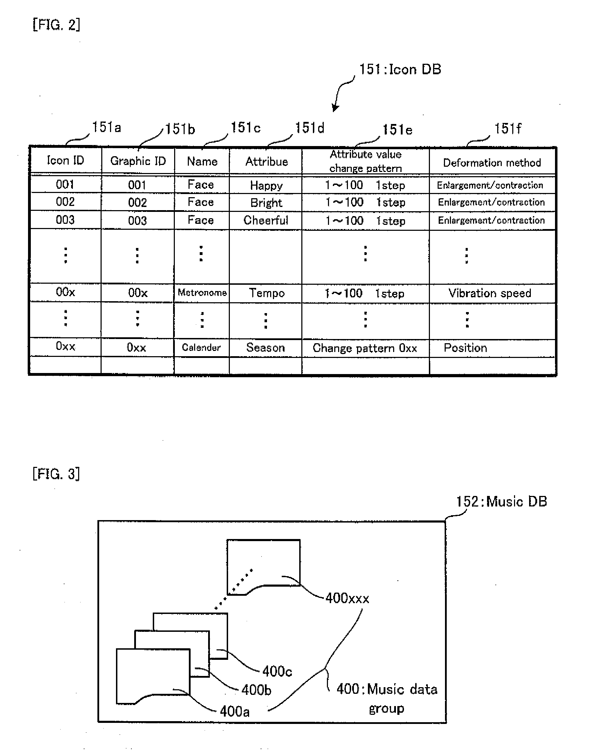

Next, with reference to FIG. 2, the details of the icon DB 151 will be described. FIG. 2 is a schematic diagram showing the icon DB 151.

In FIG. 2, the icon DB 151 is provided with items of: an icon ID 151a; a graphic ID 151b; a name 151c, an attribute 151d; an attribute value change pattern 151e; and a deformation method 151f.

The icon ID 151a is an item describing an ID for identifying an icon. The graphic ID 151b is an item describing the ID of display graphic data for displaying the icon on the display screen 210 of the display apparatus 200. Incidentally, the display graphic data is stored in a predetermined area of the memory device 150. The name 151c is an icon's name; for example, it is expressed as "face" ifit is an icon representing a human's facial expression, or the like.

The attribute 151d is an item describing the feature indicated by each icon. For example, an icon with an icon ID of "001" is an icon with an attribute of "happy". Moreover, an icon with an icon ID of "0xx" is an icon with an attribute of "season".

The attribute value change pattern 151e is an item describing the change characteristics of an attribute value which defines the status of the attribute. For example, in the icon with the icon ID of "001" (i.e. the icon with the attribute of "happy"), its attribute value is set as an index value, which defines the degree of "happiness" by "1" to "100", and the smallest setting unit is "1". Moreover, in the embodiment, the larger the attribute value is, the higher the extent is. That is, the attribute of "happiness" with an attribute value of "100" means the happiest.

Moreover, in the icon with the icon ID of "0xx" (i.e. the icon indicating "season"), the attribute value change pattern is set to a "change pattern 0xx", and its attribute value is not numerically defined, This type of icon is an icon with an attribute representing the specific characteristics of the contents. That is, as the attribute value change pattern, it adopts an aspect of the pattern that indicates which element is to be selected from a plurality of elements which are set individually and specifically for each attribute, The data indicating the content of the attribute value change pattern (e.g. the change pattern 0xx) is stored in a predetermined area of the memory device 150.

The deformation method 151f is an item describing what operation changes the attribute value. For example, in the icon with the icon ID of "001". its attribute value is changed by a change pattern described in the attribute value change pattern 151e, in accordance with an enlarging/contracting operation on the display screen 200.

Incidentally, the content shown in FIG. 2 illustrates only one example of the icon DB 151. For example, mutually different attribute value change patterns or deformation methods may be described for the icon to which one icon ID is given. For example, in the icon with the icon ID of "001", not only the enlarging/contracting operation but also another setting may be performed to change the attribute value in accordance with its position on the display screen, The description on control data for the individual icon is arbitrarily determined in a scope not to interfere with the concept of the present invention.

Next, with reference to FIG. 3, the details of the music DB 152 will be described. FIG. 3 is a schematic diagram showing the music DB 152.

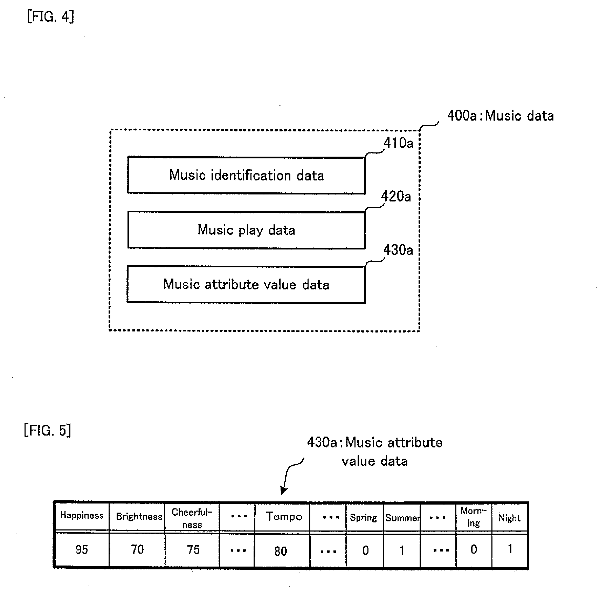

In FIG. 3, the music DB 152 stores therein a music data group 400 composed of music data 400a, 400b, 400c, ..., 400xxx, each of which corresponds to respective one of a plurality of music songs. Now, further, with reference to FIG. 4, the individual music data is described. FIG. 4 is a schematic diagram showing the music data 400a. Incidentally, in FIG. 4, the duplicate points of those in FIG. 3 carry the same numerical references, and the explanation thereof will be omitted as occasion demands. Moreover, FIG. 4 shows one music data 400a in FIG. 3; however, the other music data also have the same music data structure.

In FIG. 4, the music data 400a includes: music identification data 410a; music play data 420a; and music attribute value 430a.

The music identification data 410a is information for identifying the music, e.g. data about a music title, its artist name, and the like. The music identification data 410a is used for index display of the search result or the like if the music data group 400 is searched for the individual music data.

The music play data 420a is sound data for playing the music data 400a. The music play data 420a can sound the music corresponding to the music data 400a in the vehicle, on the basis of the music play data 420a.

The music attribute value 430a is data indicating a music attribute value (ie. one example of the "value corresponding to the attribute value" of the present invention) for specifying the attribute of the individual music. Now with reference to FIG. 5, the details of the music attribute value data 430a are explained. FIG. 5 is a schematic diagram showing the music attribute value data 430a.

In FIG. 5, the music attribute value 430a is data describing the music attribute value corresponding to the attribute value, with regard to all the attributes represented by the icons stored in the icon DB 151. The individual music attribute value adopts any aspect of a flag which indicates whether or not to correspond to (in this case, "0" indicates not correspond to and "1" indicates correspond to) an element of the corresponding attribute or an index value (i.e. which is equivalent to the attribute value of the icon described above) for defying the degree of the corresponding attribute. For example, the music indicated by the music attribute value data 430a is the music in which an index value of "happiness" for defining the attribute of "happy" is "95", in which an index value of "brightness" for defining the attribute of "bright" is "70", in which an index value of "cheerfulness" for defining the attribute of "cheerful" is "75", in which an index value of "tempo" for defining the attribute of "tempo" is "80", which does not correspond to an element of "spring" as the attribute of "season" (flag is "0"), which corresponds to an element of "summer" as the attribute of "season" (flag is "1"), which does not correspond to an element of "morning" as an attribute of "time point", and which corresponds to an element of "night" as the attribute of "time point". That is, in the range shown in FIG. 5, the music corresponding to the music attribute value 430a is a music song "which represents a summer night, which is extremely happy, and significantly bright, cheerful, and which has a tempo".

### <Operation of Embodiment>

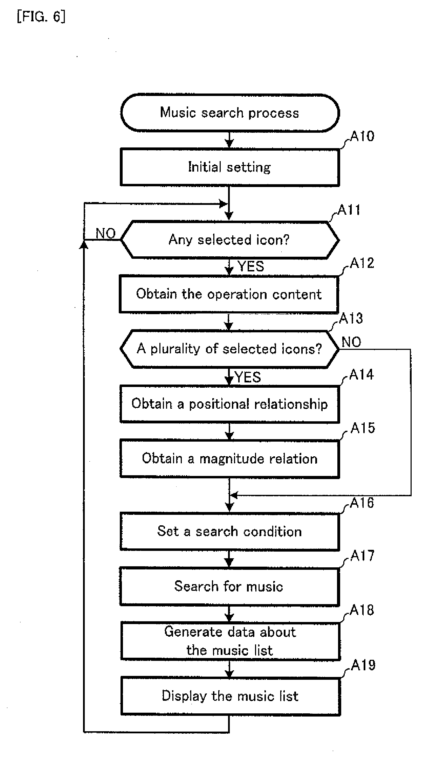

The CPU 111 provided for the control device 110 can perform the music search process for searching for the music in accordance with a control program (i.e. one example of the "computer program" of the present invention) stored in the ROM 112. Now, with reference to FIG. 6, the details of the music search process are described. FIG. 6 is a flowchart showing the music search process.

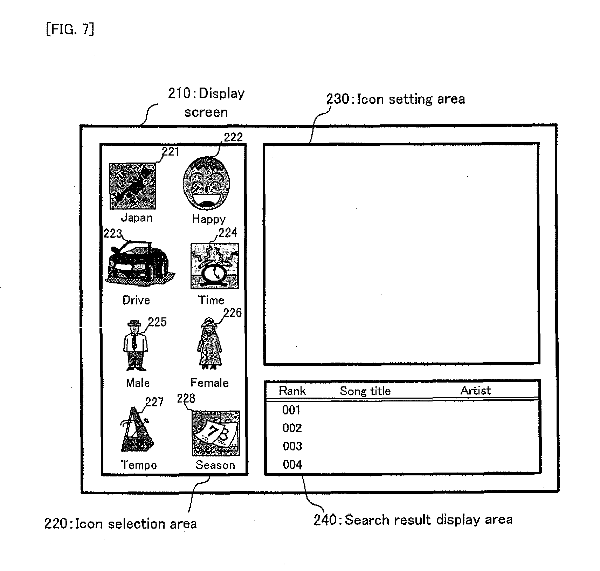

In FIG. 6, the CPU 111 performs initial setting (step AID). In the initial setting, the CPU 111 controls the display control device 130 to display an initial setting screen on the display screen 210 of the display apparatus 200. Now, with reference to FIG. 7, the initial setting screen is described. FIG. 7 is a schematic diagram showing the initial setting screen.

In FIG. 7, on the display screen 210 of the display apparatus 200, an icon selection area 220, an icon setting area 230, and a search result display area 240 are displayed as the initial setting screen.

The icon selection area 220 displays one portion of the plurality of icons stored in the icon DB 152, wherein default display is set in the one portion. In the embodiment, eight icons are displayed; namely, an icon 221 with an attribute of "Japan" (hereinafter referred to as a "Japan icon" as occasion demands), an icon 222 with an attribute of "happy" (hereinafter referred to as a "happy icon" as occasion demands), an icon 223 with an attribute of "drive" (hereinafter referred to as a "drive icon" as occasion demands), an icon 224 with an attribute of "time" (hereinafter referred to as a "time icon" as occasion demands), an icon 225 with an attribute of "male" (hereinafter referred to as a "male icon" as occasion demands), an icon 226 with an attribute of "female" (hereinafter referred to as a "female icon" as occasion demands), an icon 227 with an attribute of "tempo" (hereinafter referred to as a "tempo icon" as occasion demands), and an icon 228 with an attribute of "season" (hereinafter referred to as a "season icon" as occasion demands).

The icon setting area 230 is a display area in which the icon to be specified as the search condition is disposed. The CPU 111 starts to search for the music corresponding to the icon when the icon is disposed in the icon setting area 230.

The search result display area 240 is an area in which the music search result is displayed. In the default setting, three types of information, which are a search rank, a song title, and an artist name, are displayed in the search result display area 240. The content displayed in the search result display area 240 can be arbitrarily changed in a range set in advance.

Back in FIG. 6, when the initial setting is ended, the CPU 111 judges whether there is any selected icon (step A11). Here, the selected icon indicates the icon that is selected from the icon selection area 220 and is disposed in the icon setting area 230 by that the user performs a selection operation and a displacement operation through the operation device 140. If there is no selected icon (the step A11: NO), the CPU 111 repeats the process related to the step A11.

If there is the selected icon (the step A11: YES), the CPU 111 obtains the content of the operation performed an the selected icon (step A12) and further judges whether or not there are a plurality of types of selected icons (step A13). If there is one selected icon (the step A13: NO), the CPU 111 sets a content search condition on the basis of the operation content obtained in the process related to the step S12 (step A16).

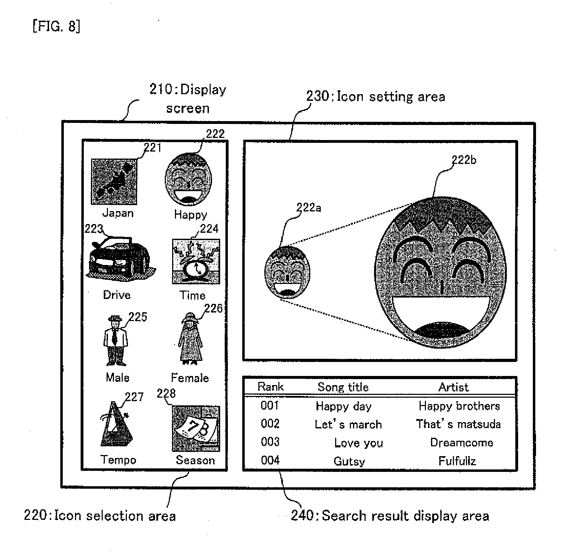

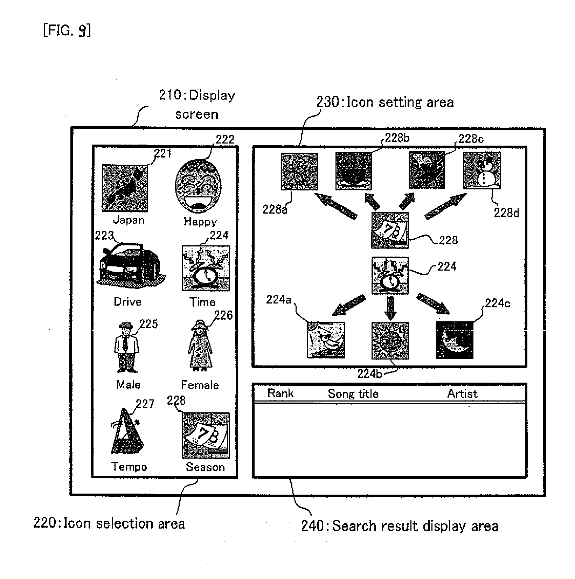

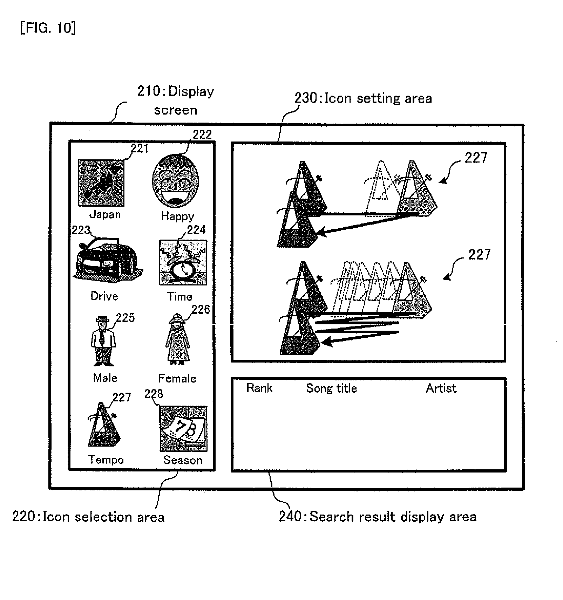

Now, with reference to FIG. 8 to FIG. 10, a description is given on the details of the search condition set in the case that there is the single selected icon. FIG. 8 is a schematic diagram showing the display screen 210. FIG. 9 is another schematic diagram showing the display screen 210. FIG. 10 is another schematic diagram showing the display screen 210. Incidentally, in each of the drawings, the duplicate points of those in FIG. 7 carry the same numerical references, and the explanation thereof will be omitted as occasion demands.

In FIG. 8, the happy icon 222 is selected from the icon selection area 220 and is displayed in the icon setting area 230. Here, the change characteristics indicating that the attribute value changes in accordance with the enlarging/contracting operation on the display screen 210 are set in advance in the happy icon 222; for example, the attribute value changes to become larger (i.e. to have a larger extent of happiness) in a relatively large happy icon 222b illustrated on the right, as compared to a relatively small happy icon 222a illustrated on the left. Along with that, in a display aspect of the happy icon 222, the happy icon 222b changes to have a happier expression than that of the happy icon 222a. The change data about the display aspect according to the change in the attribute value is also stored in a predetermined memory area of the memory device 150. Incidentally, this is not illustrated, but if the happy icon 222 is further reduced in size than the happy icon 222a inversely with the happy icon 222b, it may be set such that the expression gradually becomes sad. In this case, namely, an icon having a large attribute value with an attribute of "sad" may be searched for from the icon DB 151 and may be displayed.

Incidentally, if the icon is operated as shown in FIG. 8, the search condition set in the process related to the step A16 in FIG. 6 is, namely, the attribute value that changes in accordance with the size of the happy icon 222. For example, the search condition in case of the happy icon 222a is set such that the attribute value of the attribute of "happy" is "70", and the search condition in case of the happy icon 222b is set such that the attribute value of the attribute of "happy" is "100".

In Fig. 9, the season icon 228 and the time icon 224 are displayed in the icon setting area 230. Incidentally, they are merely displayed in the same area for convenience, and either icon shall be displayed in practice.

The season icon 228 is set such that the attribute value changes with its horizontal displacement in the icon setting area 230. For example, the season icon 228 represents an element (i.e. attribute value) of "spring" when disposed on the left edge of the icon setting area 230, an element of "summer" when disposed on the left of the central portion, an element of "autumn" when disposed on the right of the central portion, and an element of "winter" when disposed on the right edge. Such a changer characteristic is defined as "the change pattern 0xx" in the attribute value change pattern 151e in the icon DB 151, as described above. Incidentally, as in FIG. 8, the display aspect of the season icon 228 changes in accordance with the disposed position, and it changes to the icon representing each of spring, summer, autumn, and winter.

On the other hand, in case of the time icon 224, three types of elements can be adopted, each representing an element of "morning" when disposed on the left edge of the icon setting area 230, an element of "daytime" when disposed on the center, and an element of "night" when disposed on the right edge. Moreover, as in the season icon 228, its display aspect also changes in accordance with each element.

That is, in case of the icon operation as illustrated in FIG. 9, for example, if the season icon 228 is disposed on the right edge, the search condition set in the process related to the step A16 in FIG. 6 is "music that represents winter" or the like.

In FIG. 10, the tempo icon 227 is displayed in the icon setting area 230. In the tempo icon 227, its deformation method is set as a vibration speed in the icon setting area 230. That is, the attribute value changes between when it slowly vibrates horizontally, as shown in the upper part of the icon setting area 230, and when it quickly vibrates horizontally, as shown in the lower part. For example, the search condition set in the process related to the step A16 in FIG. 6 is that the attribute value of "tempo" is "30" when the tempo icon 227 is operated at the vibration speed shown in the upper part, and that the attribute value of "tempo" is "80" when the tempo icon 227 is operated at the vibration speed shown in the lower part.

Back in FIG. 6, when the search condition is set, the CPU 111 searches for the music that matches the search condition from the music DB 152 (step A17). At this time, the CPU 111 searches for the music that matches or has a closer value to the attribute value of each icon specified in accordance with the change characteristics defined in advance in the icon DB 151, as the relevant music.

Here, the attribute value of the icon and the music attribute value are mutually in a correspondence relationship. Therefore, in case of the search condition that the attribute value of the attribute of "happy" is "100", the music that matches the search condition most is music in which an index value of "happy" of the music attribute value is "100". Moreover, in case of the search condition of "music representing winter", the music that matches the search condition most is music in which a flag of "1" is placed in the element of "winter" of the music attribute value.

On the other hand, the music stored in the music DB 152 is finite, so that the music that matches the search condition does not always exist. Therefore, the CPU 111 searches for a predetermined number of music in closer order to the search condition, in the process related to the step A17. A criterion for whether or not the individual music is closer to the search condition is determined to reflect the user's feeling or emotion on an experimental, experiential, or simulation basis in advance. For example, if the given search condition is that the attribute value of the attribute of "happy" is "100", a predetermined number of music songs in which the index value of "happy" is greater than or equal to "80" as the music attribute value may be searched for in the order in which the index value is closer to "100".

When the music is searched for, the CPU 111 instructs the music list generation device 120 to generate list data for displaying a list of the searched music. The music list generation device 120 generates display data for displaying the music list in the search result display area 240, with reference to the music identification data of the music data corresponding to the respective searched music (step A18).

The generated display data is temporarily stored into the RAM 113, and then it is supplied to the display apparatus 200 in accordance with the control of the display control device 130 instructed by the CPU 111 and it is displayed on the display screen 210 (i.e. in the search result display area 240) as the music list (step A19). FIG. 8 shows that the happy music is displayed as the search result through the processes. Once the music list displayed, the process returns to the step A11 to repeat a series of processes.

Incidentally, an aspect of presenting the search result to the user is not limited to the music list. For example, one portion of the music, such as an introduction portion or a highlight portion of the music that matches the search condition, may be sequentially reproduced to be presented to the user.

On the other hand, if a plurality of icons are displayed in the icon setting area 230 (step A13: YES), in addition to the attribute value of the individual icon described above, a mutual relationship between the icons can be specified as the search condition.

That is, in this case, the CPU 111 obtains a relative positional relationship between the icons displayed in the icon setting area 230 (step A14), and a relative magnitude relation between the icons is obtained (step A15). In the process related to the step A16, the search condition is set with reference to the positional relationship and the magnitude relation, in addition to the attribute value specified on the basis of the operation content obtained in the process related to the step A12.

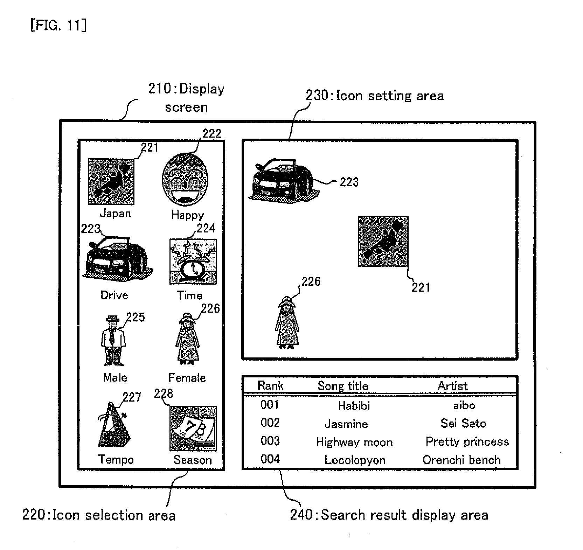

Now with reference to FIG. 11, a description is given on the case that a plurality of icons are displayed in the icon setting area 230. FIG. 11 is another schematic diagram showing the display screen 210. Incidentally, in FIG. 11, the duplicate points of those in FIG. 7 carry the same numerical references, and the explanation thereof will be omitted.

In FIG. 11, the plurality of icons, i.e. the drive icon 223, the Japan icon 221, and the female icon 226, are disposed in the icon setting area 230. In the embodiment, the icons are set such that the icons themselves are the attribute values (which may be one portion of the attribute values (or elements) with a larger attribute) and that the attribute values do not change in accordance with the operation content and the disposed positions on the icon setting area 230. Therefore, the search conditions set on the basis of the individual icons are "music suitable for a drive", "Japanese music", "female vocal music", and the like.

On the other hand, the CPU 111 changes the priority of the search condition in a longitudinal direction illustrated in the icon setting area 230. That is, on the display screen illustrated in FIG. 11, the most prioritized icon of the three types of icons is the drive icon 223. Therefore, if each of the icons is disposed as shown in FIG. 11, the CPU 111 sets such a condition that "it is music suitable for a drive and, if possible, Japanese music, and rather female vocal music", as the search condition.

If the music is searched for on the basis of such a search condition, the CPU 111 prioritizes the music that "1" is set to the element of "drive" as an absolute condition, of which "1" is set to the element of "Japan", and further of which "1" is set to the element of "female vocal".

Incidentally, it is not illustrated but if the magnitude relation between the icons is reflected in the search condition, for example, the icon with a large display ratio (i.e. a more enlarged icon) is prioritized. For example, if the enlarged drive icon 223 occupies most part of the icon setting area 230 and the Japan icon is displayed with a small size in a narrow area in which the drive icon 223 is not displayed, the set search condition may be "basically any music is fine if suitable for a drive but it is rather Japanese music". Incidentally, in contrast to the operation of enlarging or contracting the icon, there is also the icon in which the change in the attribute value is set (e.g. the aforementioned happy icon). Thus, reflecting such a magnitude relation in all the icons causes incompatibility, In case of that, it may be set such that a display rule in the icon setting area 230 is changed, as occasion demands, in accordance with the operation from the operation device 140 in advance. Alternatively, if the priority of the icon is specified on the basis of the magnitude relation, the change in the attribute value according to the enlargement / contraction may be forbidden. Moreover, if the change in the attribute value is forbidden as described above, a dialog or a software operating device (a button, lever, dial, or the like) for setting the attribute value for each icon may be displayed in accordance with the operation from the operation device 140.

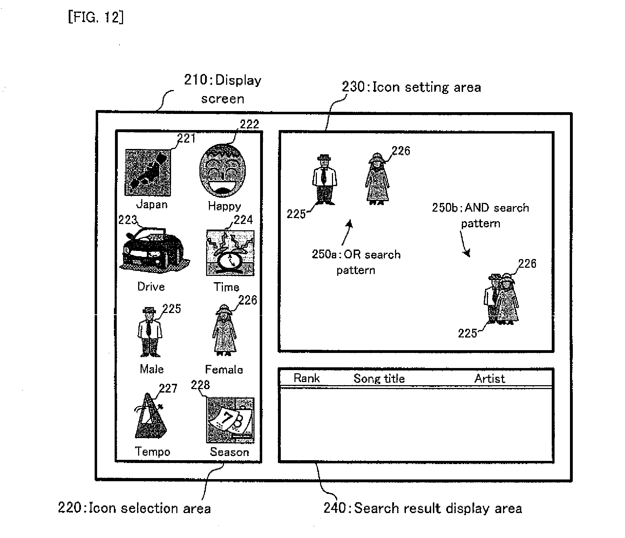

Next, with reference to FIG. 12, a description will be given on another aspect if the plurality of icons are displayed in the icon setting area 230. FIG. 12 is another schematic diagram showing the display screen 210. Incidentally, in FIG. 12, the duplicate points of those in FIG. 7 carry the same numerical references, and the explanation thereof will be omitted.

In FIG. 12, the male icon 225 and the female icon 226 are disposed in the icon setting area 230. As an aspect of disposing those icons, for example, two types are considered; namely, an OR search pattern 250a and an AND search pattern 250b as illustrated.

The OR search pattern 250 is an arrangement pattern in which the both icons are arranged in parallel. In this case, the CPU 111 sets the music search condition to be the male vocal or female vocal. On the other hand, the AND search pattern 250b is an arrangement pattern in which the both icons are arranged with them overlapping. In this case, the CPU 111 sets the music search condition to be the male vocal and female vocal. For example, in this case, a duet is searched for.

In the music search process in the first embodiment described above, it is possible to set various search conditions by performing various operations in the icon setting area 230 on the limited icons displayed in the icon selection area 220. Therefore, it is possible to set the search condition in detail, in the condition that the number of icons displayed in the icon selection area 220 is suppressed to be low enough not to reduce the user's visibility, operability, and the like. That is, it is possible to search for the content that matches the user's feeling or emotion, efficiently and effectively.

Incidentally, if the music list, as being the search result of the music, is referred to and if an input is given indicating that one of the music is to be played, the CPU 111 obtains music play data from the music data about the relevant music of all the music data included in the music DB 152, and supplies it to the music output device 300. The music output device 300 controls each play process unit on the basis of the supplied music play data and sounds the music in the vehicle. Incidentally, the CPU 111 may start to play the music, sequentially from the top of the search rank of the music list, at the time point that the music list is displayed in the search result display area 240.

### <Second Embodiment>

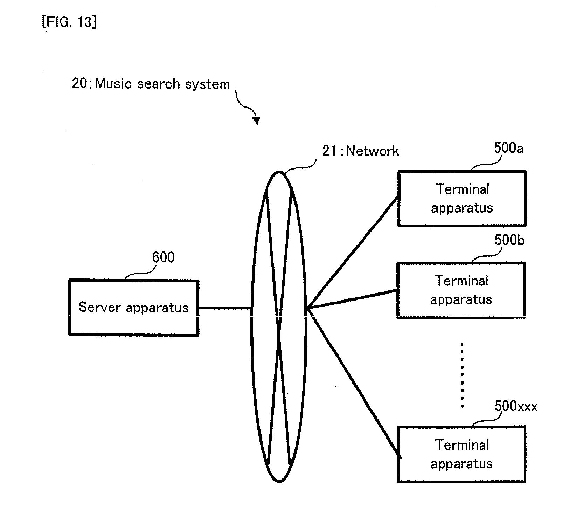

The music search method of the present invention can be achieved even through a network. Now, such a second embodiment of the present invention is explained with reference to FIG. 13. FIG. 13 is a conceptual view showing a music search system 20 in the second embodiment of the present invention.

The music search system 20 is a system included in a network 21 which is a wide area network, such as the Internet. The music search system 20 includes a server apparatus 600 and a plurality of terminal apparatuses 500a, 500b, ..., 500xxx.

The server apparatus 600 is provided by a not-illustrated provider which develops a music search service on the network 21, and the server apparatus 600 provides the music search service for a plurality of users who have gone through a predetermined authentication procedure. Each of the terminal apparatuses is possessed by the user, and it adopts a portable form, such as a mobile phone.

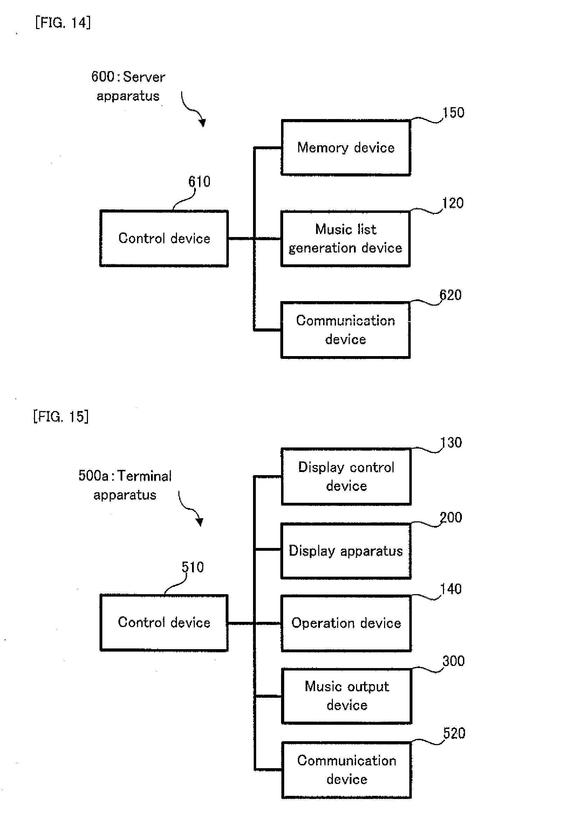

Next, with reference to FIG. 14, the detailed structure of the server apparatus 600 will be described. FIG. 14 is a block diagram showing the server apparatus 600. Incidentally, in FIG. 14, the duplicate points of those in FIG. 1 carry the same numerical references, and the explanation thereof will be omitted as occasion demands.

In FIG. 14, the server apparatus 600 is provided with: a control device 610; a music list generation device 120; a memory device 150; and a communication device 620. The server apparatus 600 is one example of the "server apparatus for the music search system" of the present invention.

The control device 610 is a control unit for controlling the operations of the serer apparatus 600, and it is constructed to perform one portion of the function of the control device 110 in the first embodiment.

The communication device 620 is a communication interface which can perform a data communication with each of the terminal apparatuses through the network 21. The communication device 620 is one example of the "second communicating device" of the present invention.

Next, with reference to FIG. 15, a description will be given on the detailed structure of the terminal apparatus 500a. FIG. 15 is a block diagram showing the terminal apparatus 500a. Incidentally, in FIG. 15, the duplicate points of those in FIG. 1 carry the same numerical references, and the explanation thereof will be omitted as occasion demands. Incidentally, the structure of the terminal apparatus is common among the terminal apparatuses, and the description on one terminal apparatus also explains the other terminal apparatuses.

In FIG. 15, the terminal apparatus 500a is provided with: a control device 510; a display control device 130; an operation device 140; a display apparatus 200; a music output device 300; and a communication device 520. The terminal apparatus 500a is one example of the "terminal apparatus" of the present invention.

The control device 510 is a control unit for controlling all the operations of the terminal apparatus 500a, and it is constructed to perform one portion of the function of the control device 110 in the first embodiment. Moreover, the control device 510 is constructed to function as one example of the "operation information generating device" of the present invention.

The communication device 520 is a communication interface which can perform a data communication with the server apparatus 600 through the network 21. The communication device 520 is one example of the "first communicating device" of the present invention.

Under the construction, in the music search system 20, the control device 610 generates initial setting data and transmits it to each terminal apparatus through the communication device 620 at the start of the music search service. In receiving the transmission of the initial setting data, the same initial setting screen as that in the first embodiment is displayed on the display apparatus 200 in each terminal apparatus.

If some operation (e.g. an operation regarding icon selection, arrangement, displacement, enlargement / contraction, or the like) is performed on the initial setting screen, the control device 510 generates operation content data indicating the content of the operation, and transmits it to the server apparatus 600 through the communication device 520.

The server apparatus 600, in response to the transmission of the operation content data, performs the process related to the music search as in the first embodiment, and generates display data for displaying the list of the music searched on the display apparatus 200. The generated display data is transmitted to the terminal apparatus 500a again through the communication device 620. As a result, the search result of the music is displayed on the display apparatus 200 of the terminal apparatus 500a, as in the first embodiment.

As described above, in the music search system 20 in the second embodiment, a huge amount of data about the music and the icons is provided for the memory apparatus on the server apparatus 600 side, and moreover, a process with a relatively heavy load, such as the specification of the attribute value of the icon and the search for the music, is also performed on the server apparatus 600 side. Therefore, on each terminal apparatus, the music can be simply searched for by performing operations, as occasion demands, on the display screen of the display apparatus 200, and it is possible to search for the music that matches the user's feeling or emotion, efficiently and effectively.

The present invention is not limited to the above-described embodiment, and various changes may be made, if desired, without departing from the essence or spirit of the invention which can be read from the claims and the entire specification. A content search apparatus, a content search system, a server apparatus for a content search system, a content search method, a computer program, and a content output apparatus with a search function, which involve such changes, are also intended to be within the technical scope of the present invention.

### Industrial Applicability

The content search apparatus, the content search system, the server apparatus for the content search system, the content search method, the computer program, and the content output apparatus with a search function according to the present invention can be applied to a content search apparatus, a content search system, a server apparatus for a content search system, and a content search method, which are to search for various contents, such as music, and a content output apparatus with a search function or the like for searching for and outputting such contents. Moreover, they can be also applied to a content search apparatus, a server apparatus for a content search system, or the like which is mounted on various computer equipment for consumer use or for commercial use, or which can be connected to various computer equipment.

## Claims

1. A content search apparatus for searching for predetermined types of contents on a display screen provided for a displaying device, said content search apparatus comprising:
a display controlling device for controlling the displaying device to display an icon in which change characteristics according to predetermined types of operations on the display screen are set in advance in an attribute value, which is defined to represent an attribute of the content and to represent a status of the attribute;
an attribute value specifying device for specifying the attribute value corresponding to performed operations in accordance with the change characteristics if the predetermined types of operations are performed on the displayed icon; and
a searching device for searching for the content corresponding to the specified attribute value from the plurality of contents, each of which has a value corresponding to the attribute value given in advance, with regard to at least one type of the attribute.

2. The content search apparatus according to claim 1, wherein the predetermined types of operations include at least one of (i) an operation of changing a size of the icon and (ii) an operation of changing a position of the icon.

3. The content search apparatus according to claim 1, wherein the searching device searches for the content corresponding to the specified attribute value on the basis of at least one of (i) a positional relationship and (ii) a ratio of size among a plurality of icons if the predetermined types of operations are performed on the plurality of icons on the display screen.

4. The content search apparatus according to claim 1, further comprising a display aspect determining device for determining an aspect of displaying the icon on which the predetermined types of operations are performed, in accordance with the specified attribute value,
said display controlling device controlling the displaying device to display the icon on which the predetermined types of operations are performed, in the determined display aspect, on the display screen.

5. The content search apparatus according to claim 1, further comprising a content information generating device for generating content information corresponding to the searched content,
said display controlling device further controlling the displaying device to display the content information on the display screen.

6. The content search apparatus according to claim 1, further comprising an inputting device for performing the predetermined types of operations.

7. The content search apparatus according to claim 1, further comprising a first memory device for storing a plurality of icons.

8. The content search apparatus according to claim 1, further comprising a second memory device for storing the plurality of contents.

9. A content output apparatus with a search function, comprising:
the content search apparatus according to claim 1; and
an outputting device for outputting the searched content.

10. A content search system comprising:
the content search apparatus according to claim 1; and
the displaying device.

11. A content search system, included in a network and including: a server apparatus; and at least one terminal apparatus,
said terminal apparatus comprising:
a display controlling device for controlling the displaying device to display an icon in which change characteristics according to predetermined types of operations on the display screen are set in advance in an attribute value, which is defined to represent an attribute of the content and to represent a status of the attribute;
an operation information generating device for generating predetermined operation information if the predetermined types of operations are performed on the displayed icon, the operation information indicating that the predetermined types of operations are performed on the displayed icon; and
a first communicating device for transmitting the operation information to said server apparatus through the network,
said server apparatus comprising:
an attribute value specifying device for specifying the attribute value corresponding to the performed operations in accordance with the change characteristics if the transmitted operation information is obtained;
a searching device for searching for the content corresponding to the specified attribute value from the plurality of contents, each of which has a value corresponding to the attribute value given in advance, with regard to at least one type of the attribute;
a content information generating device for generating content information corresponding to the searched content; and
a second communicating device for transmitting the content information to said terminal apparatus to the network,
said display controlling device controlling the displaying device to display the content information on the display screen if the transmitted content information is obtained.

12. A server apparatus for a content search system, included in a network with at least one terminal apparatus and used in a content search system in which said terminal apparatus comprises: a display controlling device for controlling the displaying device to display an icon in which change characteristics according to predetermined types of operations on the display screen are set in advance in an attribute value, which is defined to represent an attribute of the content and to represent a status of the attribute; an operation information generating device for generating predetermined operation information if the predetermined types of operations are performed on the displayed icon, the operation information indicating that the predetermined types of operations are performed on the displayed icon, and a first communicating device for transmitting the operation information to said server apparatus through the network,
said server apparatus comprising:
an attribute value specifying device for specifying the attribute value corresponding to the performed operations in accordance with the change characteristics set in advance if the transmitted operation information is obtained;
a searching device for searching for the content corresponding to the specified attribute value from the plurality of contents, each of which has a value corresponding to the attribute value given in advance, with regard to at least one type of the attribute;
a content information generating device for generating content information corresponding to the searched content; and
a second communicating device for transmitting the content information to said terminal apparatus to the network.

13. A content search method for searching for predetermined types of contents on a display screen provided for a displaying device, said content search method comprising:
a display controlling process of controlling the displaying device to display an icon in which change characteristics according to predetermined types of operations on the display screen are set in advance in an attribute value, which is defined to represent an attribute of the content and to represent a status of the attribute;
an attribute value specifying process of specifying the attribute value corresponding to performed operations in accordance with the change characteristics if the predetermined types of operations are performed on the displayed icon; and
a searching process of searching for the content corresponding to the specified attribute value from the plurality of contents, each of which has a value corresponding to the attribute value given in advance, with regard to at least one type of the attribute.

14. A computer program making a computer system function as the content search apparatus according to claim 1.

15. A computer program making a computer system function as the terminal apparatus according to claim 11.

16. A computer program making a computer system function as the server apparatus according to claim 11.
